# EUROPEAN PATENT SPECIFICATION

(11) **EP 0 574 891 B1**
(45) Date of publication and mention of the grant of the patent: **13.05.1998**
(21) Application number: 93109589.7
(22) Date of filing: 16.06.1993
(51) Int. Cl.: H03G 3/00, G09G 3/36

(54) **Method and device for amplifying**
Verstärkerverfahren und -anlage
Méthode et dispositif d'amplification

(30) Priority: 19.06.1992 EP 92401737
(43) Date of publication of application: 22.12.1993
(73) Proprietor: THOMSON multimedia, 92648 Boulogne Cédex (FR)
(72) Inventor: Dupont, Antoine, F-76000 Grenoble (FR); Benoit, Eric, F-38320 Eybens (FR); Hepp, Bernard, F-38000 Grenoble (FR)
(74) Representative: Ahrens, Thomas, Dipl.-Phys.

(56) References cited:
- EP-A- 0 417 578
- US-A- 3 585 517
- ELECTRICAL DESIGN NEWS vol. 14, no. 6, 15 March 1969, NEWTON (USA) pages 87 - 88 R. RICKS 'Boost audio power efficiently'

## Description

The present invention relates to a method according to the generic part of claim 1 and to a device according to the generic part of the first device claim.

It is known, e.g. from DE-OS 39 30 259, to amplify a signal with the aid of an amplifier which includes a first stage which converts the input signal into a puls-width modulated (PWM) signal and a second stage, which converts the PWM signal into an output signal. The duty cycle of the PWM signal depends on the value of the input signal and the value of the output signal depends on the duty cycle.

The first stage of the amplifier compares the voltage value of the input signal with a first saw tooth signal with voltage ramp which runs from a first, e.g. low, value to a second, e.g. high, value. As long as the ramp voltage is lower than the input signal voltage, amplitude of the PWM signal is high. When the voltage of the ramp signal is higher than the voltage of the input signal, the PWM signal is low.

The second stage of the amplifier compares the PWM signal with a second saw tooth signal with a given voltage run, e.g. from low to high, and thereby generates the output voltage with a value which depends on the duty cycle of the PWM signal.

The gain of such an amplifier can be chosen by according voltage runs of the first and/or of the second saw tooth signal.

In the said patent application an amplifier of the type mentioned is used for processing a video signal for driving a liquid crystal display (LCD). In dependence on the value of the output signal a driven LCD pixel changes its reflectivity or transparancy respectively.

The contrast of a video signal to be displayed by a LCD is elected by the range, which means the difference between the minimum value and the maximum value, of the output signal. The brightness of this video signal depends on the value of the minimum value and the maximum value of the output signal respectively.

That means that the contrast of the displayed video signal depends on the gain of the amplifier and the brightness on the shift of the output signal.

The prior (not yet published) German patent application P 41 03 813.4 presents also an amplifier of the type mentioned. In the said application the second stage for converting the PWM signal to the output signal is realised in a special way for decreasing non-linearities of the output signal.

According to the state of the art, for changing the gain and/or changing the shift, at least one of the voltage runs must be changed. Such a changing is quite difficult to realise.

It is an object of the present invention to change the gain of an amplifier of the type mentioned and/or to change the shift of its output signal quite easily.

This can be realised by a method according to claim 1 and a device according to the first device claim.

Improvements of the present invention are specified by the subclaims.

According to the invention the first stage and/or the second stage of an amplifier of the type mentioned works digitally. This means that a digital input signal, which is led to the first stage and/or a intermediate signal, e.g. a PWM signal, is compared with digital counter signals, value of which can be increased or decreased in a given way from a first set value to a second set value.

The first conversion in the first stage effects that during time intervals when the value of the input signal is above the value of the counter signal, level of the intermediate signal, e.g. a PWM signal, is different compared to those time intervals when the value of the input signal is lower than the value of the counter signal.

The second stage effects that the said intermediate signal is converted with the aid of a second ramp signal into an output signal, whereby the value of said output signal depends on the duration of one or more states of the intermediate signal.

If the run of the intermediate signal is influenced by the run of the second ramp signal, e.g. in that way that amplitude of the intermediate signal is decreased or increased according to the second ramp signal, unlinearities of the amplifier can be reduced.

The use of this invention for driving a LCD is advantageous because brightness and/or contrast can be changed very easily.

Further details, characteristics and advantages of the invention will be explained in the following embodiments with the aid of the drawing. It shows
- Fig. 1 :: a first embodiment of the invention;
- Fig. 2 :: signals occuring in the embodiment of fig. 1.

Prior to the detailed description of the embodiments it may be mentioned that the blocks shown in the figures just serve for a better understanding of the invention. Normally at least some of these blocks are integrated to units. These units can be realised in integrated or hybrid technology or as part of a microcomputer or as part of a program for controlling this computer.

The elements included in the single blocks can also be realised separately.

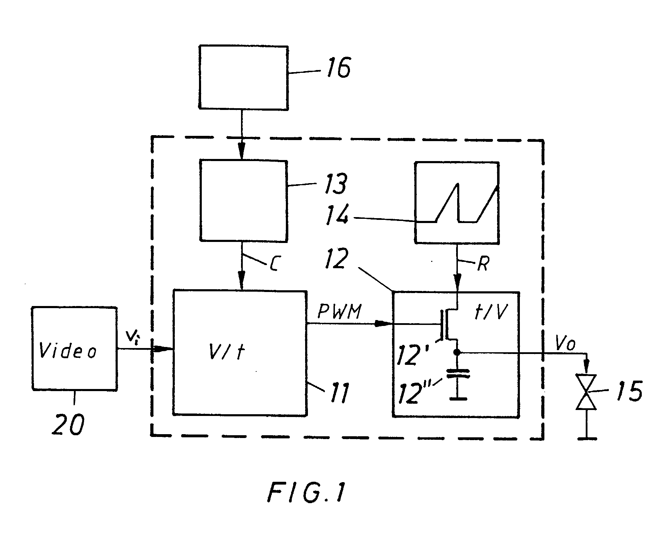

Fig. 1 shows a preferred embodiment of the invention.

An amplifier 10 includes a voltage-to-time (V/t) converter 11 and a time-to-voltage (t/V) converter 12. An input signal Vi, which is in this embodiment derived from a video signal generated by a video source 20, which may be camera, a video recorder, a video memory, digital and/or analog, or thelike, is led to a first input terminal of the V/t converter 11 and the signal of a counter 13 is led to a second input terminal of the converter 11.

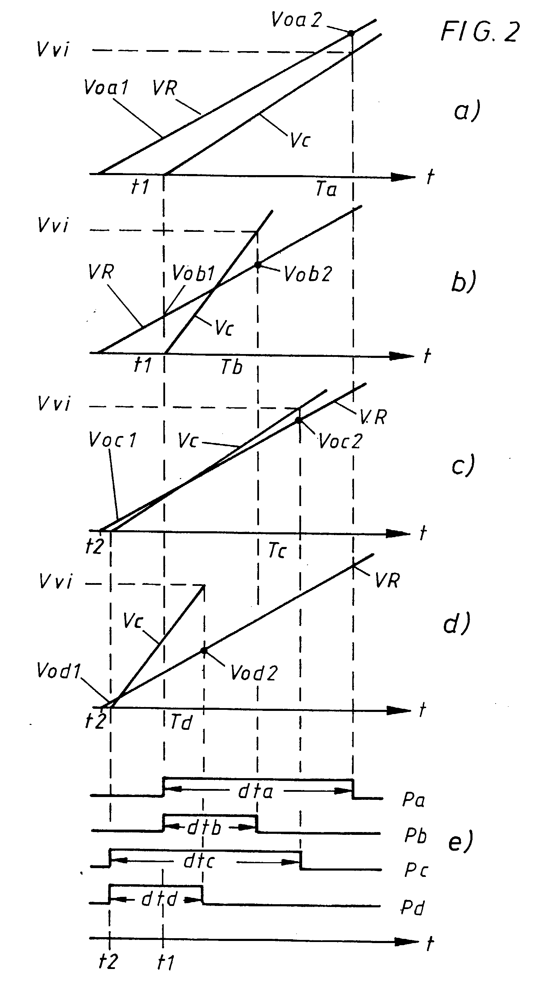

A PWM signal generated by the V/t converter 11 is led to a first input terminal of the t/V converter 12, a second input terminal of which is connected to a ramp voltage generator 14 which supplies a ramp voltage signal VR like indicated in principle inside the block 14 and also shown in fig. 2. The output signal Vo of the converter 12 is led to further means, in this embodiment to a LCD panel 15.

The t/V converter 12 can include, like in this embodiment, a MOS transistor 12', source of which is connected to the generator 14, and drain is connected to a first terminal of a capacitor 12'', where the output signal Vo can be taken from. The PWM signal is led to the gate of transistor 12' and a second terminal of capacitor 12'' is connected to ground in this embodiment. Another connection of the second terminal of capacitor 12'', e.g. to a non-shown DC-voltage, is also possible.

Parameters of the counter 13, e.g. like the counter clock frequency and/or the counter start time, can be controlled and elected by control means which are in this embodiment included in an input unit 16.

Detailed descriptions of the function of an amplifier of the type mentioned are given in the published German patent application DE-OS 39 30 259 and the prior (not yet published) German patent application P 41 03 813.4. The way the amplifier works will be explained in the further description only as far as it is necessary for the understanding of the present invention.

The main difference between the known amplifiers and the embodiment of fig. 1 is, that the converter 11 works digitally. That means as well the input signal Vi as the counter signal C are digital signals. If an analog input signal is to be processed an analog-to-digital (A/D) converter is to be provided.

Fig. 2 shows diagrams of signals which may occur in the embodiment of fig. 1.

Fig. 2a shows the run of the ramp voltage VR, a first run Vc of values of the signal C and a value Vvi of a digital input signal Vi. The counter is started at a time t1 and at a time Ta the value Vc of the counter signal C is equal to Vvi.

Fig. 2e shows PWM signals Pa,...,Pd generated by the converter 11 for the examples shown in fig. 2a...d. When the counter 13 is started (t1) the signal Pa is set "high". After a "high"-time dta the signal Pa is set "low" at t = Ta.

As long as the signal Pa is high the transistor 12' is conductive and the capacitor 12'' is loaded with the ramp voltage signal VR of the generator 14. When Pa becomes "low" (Ta), the transistor 12' is blocked and the corresponding value of the signal R is stored in the capacitor 12''.

The points Voa1,...,Vod1 indicate the voltage value at the capacitor 12'' for that moment when the counter 13 is started and the points Voa2,...,Vod2 indicate values of voltages stored in capacitor 12'' when the transistor 12' is blocked.

With the diagram of fig. 2a video signals can be displayed on a LCD with
a first brightness value b1
and
a first contrast value c1.

Fig. 2b shows another run of the curve Vc. The counter 13 is started at the same time (t1) as in fig. 2a, but the clock frequency of the counter is increased, which results in a higher slope of Vc.

The according PWM signal Pb shown in fig. 2e starts also at t1 but its duty cycle ("high"-time/"low"-time) is lower.

As the "high"-time dtb is smaller than dta, the value of the voltage Vob2 stored in capacitor 12'' is lower for the value Vvi compared to the example of fig. 2a. This means that the value-difference of the voltages Vob1, Vob2 is lower. This results in
a second contrast value c2, which is lower than c1.

The brightness b2 of the videosignal is the same as in fig. 2a. This means
b2 = b1.

Fig. 2c shows a third run of the curve Vc. The slope is the same as in fig. 2a but the starting point is earlier (t2) than in fig. 2a and fig. 2b (t1). This can be realised by starting the counter 14 earlier. The clock frequency is the same as in the example of fig. 2a.

The corresponding PWM signal Pc has a "high"-time of dtc, which is in this example equal to dta. Theereby the difference between Voc1 and Voc2 is the same as between Voa1 and Voa2 and the contrast value c3 is
c3 = c1.

The brightness value
b3 is lower than b1 or b2
respectively. This can be explained by the fact that the voltage values Voc1, Voc2 for darker and brighter videosignals are lower.

Fig. 2d shows another example with the same slope of Vc, and the same counter clock frequency, as in fig. 2b and the same starting point (t2) as in fig. 2c.

Regarding the PWM signal Pd it can be seen that the voltage value Vod1 for dark signals is equal to Voc1, which means
b4 = b3,
and the difference between Vod1 and Vod2 is equal to the difference between Vob1 and Vob2, which means
c4 = c2.

In conclusion it may be mentioned that through the embodiment of fig. 1 brightness and/or contrast of a video signal to be displayed with the aid of a LCD panel can be changed very easily, as the counter clock frequency and the starting point of the counter 13 can be changed very easily.

Versions of the above mentioned embodiments may include at least one of the following variations:
- instead of or additionally to varying the slope and the starting point of the ramp generated by the counter 13, the ramp signal R supplied to the t/V converter 12 can be generated by a counter whereby the run of R can be varied easily by changing the according starting point and clock frequency;
- D/A converters may be provided between the counters and the converters 11 and/or 12 for processing analog signals;
- the ramp generator 14 may generate a ramp signal with a decreasing saw tooth. This has the advantage that the value of the voltage stored in capacitor 12'' is more independend on its capacitance. In this case according LCD means 15 or an inverter must be provided;
- the values for counter start (brightness) and/or counter clock frequency (contrast) can be controlled by control means in dependence on given set values and sensor signals;
- amplifier and/or filter means may be provided, e.g. between the converter 12 and the LCD 15;
- characteristics mentioned in the said German patent applications can be combined, as for example
   - the PWM signal can be influenced in dependence on the run of the rampvoltage signal R (see P 41 03 813.4);
   - one raw or more raws of LCD pixels can be driven simultaneously (see DE-OS 39 30 259).

## Claims

1. Method for amplifying an input signal by
- a first conversion of said input signal with the aid of a first ramp signal into an intermediate signal having two or more possible states where the duration of one or more of these states depends on the value of the input signal,
- a second conversion of said intermediate signal with the aid of a second ramp signal into an output signal, whereby the value of said output signal depends on the duration of one or more states of the intermediate signal
wherein the input signal is a measure for a video signal and with the aid of the output signal liquid crystal display means are driven
characterized in that
the first ramp signal and/or the second ramp signal is generated by a first counter or a second counter respectively and
that the starting moment of the first counter and/or of the second counter determines the brightness of a signal to be displayed by the liquid crystal display means.

2. Method according to claim 1, characterized in that the shape of the curve of the intermediate signal is influenced by the shape of the curve of the second ramp signal.

3. Method according to claim 1, characterized in that the counter clock frequency of the first and/or of the second counter determines the contrast of a signal to be displayed by the liquid crystal display means.

4. Method for amplifying an input signal by
- a first conversion of said input signal with the aid of a first ramp signal into an intermediate signal having two or more possible states where the duration of one or more of these states depends on the value of the input signal,
- a second conversion of said intermediate signal with the aid of a second ramp signal into an output signal, whereby the value of said output signal depends on the duration of one or more states of the intermediate signal
wherein the input signal is a measure for a video signal and with the aid of the output signal liquid crystal display means are driven
characterized in that
the first ramp signal and/or the second ramp signal is generated by a first counter or a second counter respectively
and that counter clock frequency of the first and/or or the second counter determines the contrast of a signal to be displayed by the liquid crystal display means.

5. Method according to claim 1, characterized in that the starting moment of the first counter and/or of the second counter determines the brightness of a signal to be displayed by the liquid crystal display means.

6. Device for amplifying an input signal having
- a first stage (11) for the conversion of said input signal with the aid of a first ramp signal generated by first ramp means (13) into an intermediate signal (PWM) having two or more possible states wherein the duration of one or more of these states depends on the value of the input signal,
- a second stage (12) for the conversion of said intermediate signal (PWM) with the aid of a second ramp signal generated by second ramp means (14) into an output signal (Vo), whereby the value of said output signal (Vo) depends on the duration of one or more states of the intermediate signal (PWM),
wherein a video source (20) is provided, which generates a video signal from which the input signal is derived and liquid crystal display means (15) are provided which are driven with the aid of the output signal (Vo)
characterized in that
the first ramp means (13) and/or the second ramp means (14) include counter means
and control means are provided which determine and influence the starting moment of the first counter means (13) and/or of the second counter means (14) in dependence on a given value of the brightness of a signal to be displayed by the liquid crystal display means (15).

7. Device according to claim 6, characterized in that adapting means are provided which influence the shape of the curve of the intermediate signal (PWM) in dependence on the shape of the curve of the second ramp signal (R).

8. Device according to claim 6, characterized in that control means are provided which determine and influence the clock frequency of the first counter means (13) and/or of the second counter means (14) in dependence on a given value of the contrast of a signal to be displayed by the liquid crystal display means (15).

9. Device for amplifying an input signal having
- a first stage (11) for the conversion of said input signal with the aid of a first ramp signal generated by first ramp means (13) into an intermediate signal (PWM) having two or more possible states wherein the duration of one or more of these states depends on the value of the input signal,
- a second stage (12) for the conversion of said intermediate signal (PWM) with the aid of a second ramp signal generated by second ramp means (14) into an output signal (Vo), whereby the value of said output signal (Vo) depends on the duration of one or more states of the intermediate signal (PWM),
wherein a video source (20) is provided, which generates a video signal from which the input signal is derived and liquid crystal display means (15) are provided which are driven with the aid of the output signal (Vo)
characterized in that
the first ramp means (13) and/or the second ramp means (14) include counter means
and control means are provided which determine and influence the clock frequency of the first counter means (13) and/or of the second counter means (14) in dependence on a given value of the contrast of a signal to be displayed by the liquid crystal display means (15).

10. Device according to claim 9 characterized in that control means are provided which determine and influence the starting moment of the first counter means (13) and/or of the second counter means (14) in dependence on a given value of the brightness of a signal to be displayed by the liquid crystal display means (15).

## Patentansprüche

1. Verfahren zur Verstärkung eines Eingangsignals durch
- eine erste Umsetzung des Eingangssignals mit Hilfe eines ersten Rampensignals in ein Zwischensignal mit zwei oder mehreren möglichen Zuständen, wobei die Dauer eines oder mehrerer dieser Zustände von dem Wert des Eingangssignals abhängig ist,
- eine zweite Umsetzung des Zwischensignals mit Hilfe eines zweiten Rampensignals in ein Ausgangssignal, wobei der Wert des Ausgangssignals von der Dauer eines oder mehrerer Zustände des Zwischensignals abhängig ist,
worin das Eingangssignal ein Maß ist für ein Videosignal und die Flüssigkristall-Wiedergabemittel mit Hilfe des Ausgangssignals angesteuert werden,
dadurch gekennzeichnet, daß
das erste Rampensignal und/oder das zweite Rampensignal durch einen ersten Zähler bzw. einen zweiten Zähler erzeugt werden und
daß der Startzeitpunkt des ersten Zählers und/oder des zweiten Zählers die Helligkeit eines durch die Flüssigkristall-Wiedergabemittel wiederzugebenden Signals bestimmt.

2. Verfahren nach Anspruch 1,
dadurch gekennzeichnet, daß die Form der Kurve des Zwischensignals durch die Form der Kurve des zweiten Rampensignals beeinflußt wird.

3. Verfahren nach Anspruch 1,
dadurch gekennzeichnet, daß die Zählertaktfrequenz des ersten und/oder des zweiten Zählers den Kontrast eines durch die Flüssigkristall-Wiedergabemittel wiederzugebenden Signals bestimmt.

4. Verfahren zur Verstärkung eines Eingangssignals durch
- eine erste Umsetzung des Eingangssignals mit Hilfe eines ersten Rampensignals in ein Zwischensignal mit zwei oder mehreren möglichen Zuständen, wobei die Dauer eines oder mehrerer dieser Zustände von dem Wert des Eingangssignals abhängig ist,
- eine zweite Umsetzung des Zwischensignals mit Hilfe eines zweiten Rampensignals in ein Ausgangssignal, wobei der Wert des Ausgangssignals von der Dauer eines oder mehrerer Zustände des Zwischensignals abhängig ist,
worin das Eingangssignal ein Maß für ein Videosignal ist und die Flüssigkristall-Wiedergabemittel durch das Ausgangssignal angesteuert werden,
dadurch gekennzeichnet, daß
das erste Rampensignal und/oder das zweite Rampensignal durch einen ersten Zähler bzw. einen zweiten Zähler erzeugt werden
und daß die Zählertaktfrequenz des ersten und/oder des zweiten Zählers den Kontrast eines durch die Flüssigkristall-Wiedergabemittel wiederzugebenden Signals bestimmt.

5. Verfahren nach Anspruch 1,
dadurch gekennzeichnet, daß der Startzeitpunkt des ersten Zählers und/oder des zweiten Zählers die Helligkeit eines durch die Flüssigkristall-Wiedergabemittel wiederzugebenden Signals bestimmt.

6. Vorrichtung zur Verstärkung eines Eingangssignals, enthaltend
- eine erste Stufe (11) für die Umsetzung des Eingangssignals mit Hilfe eines durch erste Rampenmittel (13) erzeugten ersten Rampensignals in ein Zwischensignal (PWM) mit zwei oder mehreren möglichen Zuständen, worin die Dauer eines oder mehrerer dieser Zustände von dem Wert des Eingangssignals abhängig ist,
- eine zweite Stufe (12) für die Umsetzung des Zwischensignals (PWM) mit Hilfe eines durch die zweiten Rampenmittel (14) erzeugten zweiten Rampensignals in ein Ausgangssignal (Vo), wobei der Wert des Ausgangssignals (Vo) von der Dauer eines oder mehrerer Zustände des Zwischensignals (PWM) abhängig ist,
worin eine Videoquelle (20) vorgesehen ist, die ein Videosignal erzeugt, von dem das Eingangssignal abgeleitet ist, und Flüssigkristall-Wiedergabemittel (15) vorgesehen sind, die mittels des Ausgangssignals (Vo) angesteuert werden,
dadurch gekennzeichnet, daß
die ersten Rampenmittel (13) und/oder die zweiten Rampenmittel (14) Zählermittel enthalten
und Steuermittel vorgesehen sind, die den Startzeitpunkt der ersten Zählermittel (13) und/oder der zweiten Zählermittel (14) in Abhängigkeit von einem bestimmten Wert der Helligkeit eines durch die Flüssigkristall-Wiedergabemittel (15) wiederzugebenden Signals bestimmen und beeinflussen.

7. Vorrichtung nach Anspruch 6, dadurch gekennzeichnet, daß Adaptiermittel vorgesehen sind, die die Form der Kurve des Zwischensignals (PWM) in Abhängigkeit von der Form der Kurve des zweiten Rampensignals (R) beeinflussen.

8. Vorrichtung nach Anspruch 6, dadurch gekennzeichnet, daß Steuermittel vorgesehen sind, die die Taktfrequenz der ersten Zählermittel (13) und/oder der zweiten Zählermittel (14) in Abhängigkeit von einem bestimmten Wert des Kontrastes eines durch die Flüssigkristall-Wiedergabemittel (15) wiederzugebenden Bildes beeinflussen.

9. Vorrichtung zur Verstärkung eines Eingangssignals, enthaltend
- eine erste Stufe (11) zur Umsetzung des Eingangssignals mit Hilfe eines durch die ersten Rampenmittel (13) erzeugten ersten Rampensignals in ein Zwischensignal (PWM) mit zwei oder mehreren möglichen Zuständen, worin die Dauer eines oder mehrerer dieser Zustände von dem Wert des Eingangssignals abhängig ist,
- eine zweite Stufe (12) zur Umsetzung des Zwischensignals (PWM) mit Hilfe eines durch zweite Rampenmittel (14) erzeugten zweiten Rampensignals in ein Ausgangssignal (Vo), wobei der Wert des Ausgangssignals (Vo) von der Dauer eines oder mehrerer Zustände des Zwischensignals (PWM) abhängig ist,
worin eine Videoquelle (20) vorgesehen ist, die ein Videosignal erzeugt, von dem das Eingangssignal abgeleitet ist, und daß Flüssigkristall-Wiedergabemittel (15) vorgesehen sind, die mit Hilfe des Ausgangssignals (Vo) angesteuert werden,
dadurch gekennzeichnet, daß
die ersten Rampenmittel (13) und/oder die zweiten Rampenmittel (14) Zählermittel enthalten
und daß Steuermittel vorgesehen sind, die die Taktfrequenz der ersten Zählermittel (13) und/oder der zweiten Zählermittel (14) in Abhängigkeit von einem bestimmten Wert des Kontrastes eines durch die Flüssigkristall-Wiedergabemittel (15) wiederzugebenden Signals bestimmen und beeinflussen.

10. Vorrichtung nach Anspruch 9, dadurch gekennzeichnet, daß Steuermittel vorgesehen sind, die den Startzeitpunkt der ersten Zählermittel (13) und/oder der zweiten Zählermittel (14) in Abhängigkeit von einem bestimmten Wert der Helligkeit eines durch die Flüssigkristall-Wiedergabemittel (15) wiederzugebenden Signals bestimmen und beeinflussen.

## Revendications

1. Procédé pour amplifier un signal d'entrée consistant à appliquer
- une première conversion du dit signal d'entrée à l'aide d'un premier signal en dent de scie en un signal intermédiaire ayant au moins deux états possibles, où la durée d'au moins l'un de ces états dépend de la valeur du signal d'entrée,
- une deuxième conversion du dit signal intermédiaire à l'aide d'un deuxième signal de rampe en un signal de sortie, où la valeur du dit signal de sortie dépend de la durée d'au moins un état du signal intermédiaire,
où le signal d'entrée est une mesure pour un signal vidéo, et un dispositif d'affichage à cristaux liquides est attaqué à l'aide du signal de sortie,
caractérisé en ce que
le premier signal en dent de scie et/ou le deuxième signal en dent de scie sont générés par un premier compteur ou un deuxième compteur, respectivement, et en ce que
l'instant de déclenchement du premier compteur et/ou du deuxième compteur détermine la luminosité d'un signal à afficher par le dispositif d'affichage à cristaux liquides.

2. Procédé selon la revendication 1, caractérisé en ce que la forme de la courbe du signal intermédiaire est influencée par la forme de la courbe du deuxième signal en dent de scie.

3. Procédé selon la revendication 1, caractérisé en ce que la fréquence d'horloge de comptage du premier et/ou du deuxième compteur détermine le contraste d'un signal à afficher par le dispositif d'affichage à cristaux liquides.

4. Procédé pour amplifier un signal d'entrée consistant à appliquer
- une première conversion du dit signal d'entrée à l'aide d'un premier signal en dent de scie en un signal intermédiaire ayant au moins deux états possibles, où la durée d'au moins l'un de ces états dépend de la valeur du signal d'entrée,
- une deuxième conversion du dit signal intermédiaire à l'aide d'un deuxième signal de rampe en un signal de sortie, où la valeur du dit signal de sortie dépend de la durée d'au moins un état du signal intermédiaire,
où le signal d'entrée est une mesure pour un signal vidéo, et un dispositif d'affichage à cristaux liquides est attaqué à l'aide du signal de sortie,
caractérisé en ce que
le premier signal en dent de scie et/ou le deuxième signal en dent de scie sont générés par un premier compteur ou un deuxième compteur, respectivement, et en ce que
la fréquence d'horloge du premier compteur et/ou du deuxième compteur détermine le contraste d'un signal à afficher par le dispositif d'affichage à cristaux liquides.

5. Procédé selon la revendication 1, caractérisé en ce que l'instant de déclenchement du premier et/ou du deuxième compteur détermine la luminosité d'un signal à afficher par le dispositif d'affichage à cristaux liquides.

6. Dispositif pour amplifier un signal d'entrée, comprenant
- un premier étage (11) pour la conversion du dit signal d'entrée à l'aide d'un premier signal en dent de scie généré par un premier dispositif de génération de rampe (13) en un signal intermédiaire (PMW) ayant au moins deux états possibles, où la durée d'au moins l'un de ces états dépend de la valeur du signal d'entrée,
- un deuxième étage (12) pour la conversion du dit signal intermédiaire (PWM) à l'aide d'un deuxième signal en dent de scie généré par un deuxième dispositif de génération de rampe (14) en un signal de sortie (Vo), où la valeur du dit signal de sortie (Vo) dépend de la durée d'au moins un état du signal intermédiaire (PWM),
où une source vidéo (20) est prévue pour générer un signal vidéo duquel le signal d'entrée est dérivé et un dispositif d'affichage à cristaux liquides (15) est prévu, dispositif qui est attaqué à l'aide du signal de sortie (Vo),
caractérisé en ce que
le premier dispositif de génération de rampe (13) et/ou le deuxième dispositif de génération de rampe (14) incluent un compteur, et en ce que
un dispositif de commande est prévu pour déterminer et influencer l'instant de déclenchement du premier compteur (13) et/ou du deuxième compteur (14) en fonction d'une valeur donnée de la luminosité d'un signal à afficher par le dispositif d'affichage à cristaux liquides (15).

7. Dispositif selon la revendication 6, caractérisé en ce que un adaptateur est prévu pour influencer la forme de la courbe du signal intermédiaire (PWM) en fonction de la forme du deuxième signal en dent de scie (R).

8. Dispositif selon la revendication 6, caractérisé en ce que un dispositif de commande est prévu pour déterminer et influencer la fréquence d'horloge du premier compteur (13) et/ou du deuxième compteur (14) en fonction d'une valeur donnée du contraste d'un signal à afficher par le dispositif d'affichage à cristaux liquides (15).

9. Dispositif pour amplifier un signal d'entrée, comprenant
- un premier étage (11) pour la conversion du dit signal d'entrée à l'aide d'un premier signal en dent de scie généré par un premier dispositif de génération de rampe (13) en un signal intermédiaire (PMW) ayant au moins deux états possibles, où la durée d'au moins l'un de ces états dépend de la valeur du signal d'entrée,
- un deuxième étage (12) pour la conversion du dit signal intermédiaire (PWM) à l'aide d'un deuxième signal en dent de scie généré par un deuxième dispositif de génération de rampe (14) en un signal de sortie (Vo), où la valeur du dit signal de sortie (Vo) dépend de la durée d'au moins un état du signal intermédiaire (PWM),
où une source vidéo (20) est prévue pour générer un signal vidéo duquel le signal d'entrée est dérivé et un dispositif d'affichage à cristaux liquides (15) est prévu, dispositif qui est attaqué à l'aide du signal de sortie (Vo),
caractérisé en ce que
le premier dispositif de génération de rampe (13) et/ou le deuxième dispositif de génération de rampe (14) incluent un compteur, et en ce que
un dispositif de commande est prévu pour déterminer et influencer la fréquence d'horloge du premier compteur (13) et/ou du deuxième compteur (14) en fonction d'une valeur donnée du contraste d'un signal à afficher par le dispositif d'affichage à cristaux liquides (15).

10. Dispositif selon la revendication 9, caractérisé en ce que un dispositif de commande est prévu pour déterminer et influencer l'instant de déclenchement du premier compteur (13) et/ou du deuxième compteur (14) en fonction d'une valeur donnée de la luminosité d'un signal à afficher par le dispositif d'affichage à cristaux liquides (15).
